Europäisches Patentamt

European Patent Office

Office européen des brevets

(11) Publication number: **0 342 772**
**A2**

## EUROPEAN PATENT APPLICATION

(21) Application number: 89300014.1

(22) Date of filing: 04.01.89

(51) Int. Cl.⁴: **G06K 7/12 , G06K 19/06**

(30) Priority: 19.05.88 JP 123676/88

(43) Date of publication of application:
23.11.89 Bulletin 89/47

(84) Designated Contracting States:
DE FR GB

(71) Applicant: PIONEER ELECTRONIC
CORPORATION
No. 4-1, Meguro 1-chome
Meguro-ku Tokyo 153(JP)

(72) Inventor: Shiratori, Kuniaki Pioneer Electronic
Corporation
Tokorozawa Works, No. 2610 Hanazono
4-chome
Tokorozawa-shi Saitama(JP)
Inventor: Nojiri, Shin-ichi Pioneer Electronic
Corporation
Tokorozawa Works, No. 2610 Hanazono
4-chome
Tokorozawa-shi Saitama(JP)
Inventor: Ishibashi, Masaya Pioneer
Electronic Corporation
Tokorozawa Works, No. 2610 Hanazono
4-chome
Tokorozawa-shi Saitama(JP)
Inventor: Yamada, Takao Pioneer Electronic
Corporation
Tokorozawa Works, No. 2610 Hanazono
4-chome
Tokorozawa-shi Saitama(JP)
Inventor: Katata, Keiji Pioneer Electronic
Corporation
Tokorozawa Works, No. 2610 Hanazono
4-chome
Tokorozawa-shi Saitama(JP)
Inventor: Oishi, Masami Pioneer Electronic
Corporation
Tokorozawa Works, No. 2610 Hanazono
4-chome
Tokorozawa-shi Saitama(JP)
Inventor: Okubo, Kirotoshi Pioneer Electronic
Corporation
Tokorozawa Works, No. 2610 Hanazono
4-chome
Tokorozawa-shi Saitama(JP)
Inventor: Tagawa, Akihiko Pioneer Electronic
Corporation
Tokorozawa Works, No. 2610 Hanazono
4-chome
Tokorozawa-shi Saitama(JP)
Inventor: Tobe, Takeo Pioneer Electronic
Corporation
Tokorozawa Works, No. 2610 Hanazono
4-chome
Tokorozawa-shi Saitama(JP)
Inventor: Tsudome, Hirohisa Pioneer
Electronic Corporation
Tokorozawa Works, No. 2610 Hanazono
4-chome
Tokorozawa-shi Saitama(JP)

(74) Representative: Jackson, Peter Arthur et al
GILL JENNINGS & EVERY 53-64 Chancery
Lane
London WC2A 1HN(GB)

(54) Multi-printing bar code system.

(57) A bar code is multi-printed with plural inks hav-
ing different absorptance characteristics, and the bar
code is then scanned with two different wavelengths
of reading light to obtain two different information
signals.

FIG. 1

## MULTI-PRINTING BAR CODE SYSTEM

The present invention relates to a multi-printing bar code system, and more particularly to such a system having a plurality of meanings and employing a reader device equipped with an optical source emitting light in different wavelength regions.

A bar code system, as shown in Figure 3, is adapted to read any bar code previously printed on an article, e.g., a sheet of paper, via a reader device to thereby provide information represented by the bar code therefrom. In the figure, a group of bar codes 2 are printed on a sheet of paper 2 with use of ink which is absorptive in a visible range, e.g., carbon ink, and the bar codes are then read by a reader device 30.

The reader device 30 includes an LED driving part 32, an LED 33, a photodisk 34, an amplifier 35, and a waveform shaper 36, all disposed in a scanner body 31, further including a lens 37 mounted over a transparent hole formed through a tip of the scanner body 31.

As the reader device 30 scans the bar code 2 light emitted by the LED 33 is focused on the sheet of paper 1 through the lens 37, and is absorbed on the bar code 2, thereby preventing reflected light from reaching the photodetector 34 but allowing only light reflected on the sheet of paper 1 to reach the photodetector 34. The latter light is outputted onto an output terminal 36A as a bar code pattern signal after passage through the amplifier 35 and the waveform shaper 36.

Such a prior art bar code system, however, is unsatisfactory in that a single bar code can carry only a single piece of information and hence plural bar codes are required for carrying many pieces of information. For example, when used in a learning system, bar codes are required for each of the first, middle, and upper classes, with the result that the system is quite complicated.

In view of the drawbacks of the prior art, it is an object of the present invention to provide a multi-printing bar code system capable of extracting many pieces of information from a reduced number of bar codes by (1) printing a single bar code with different inks each having different wavelength characteristics, (2) providing reader device whose optical source emits different wavelength lights, and (3) reading the foregoing single bar code with the different wavelength lights.

To achieve the above objects, a multi-printing bar code system according to the present invention includes a reader device which selects a visible light region and optical wavelength regions such as an infrared region other than the visible light region and emits light in the visible light region or the optical wavelength regions. The reader device reads a bar code pattern formed by multi-printing (1) a bar code printed with ink absorptive in the optical wavelength regions other than the visible light region but transparent in the visible light region, and (2) a bar code printed with ink transparent in the optical wavelength regions other than the visible light region.

The invention will be more clearly understood from the following description in conjunction with the accompanying drawings, in which:

Figure 1 is a view in cross section of a printed bar code and a reader device, for explaining a multi-printing bar code system according to the present invention;

Figure 2 is a diagram illustrating a relationship between the wavelength and absorbances when using ink for bar code printing in Figure 1 ; and

Figure 3 is a cross sectional view illustrating a prior art single bar code and a prior art reader device.

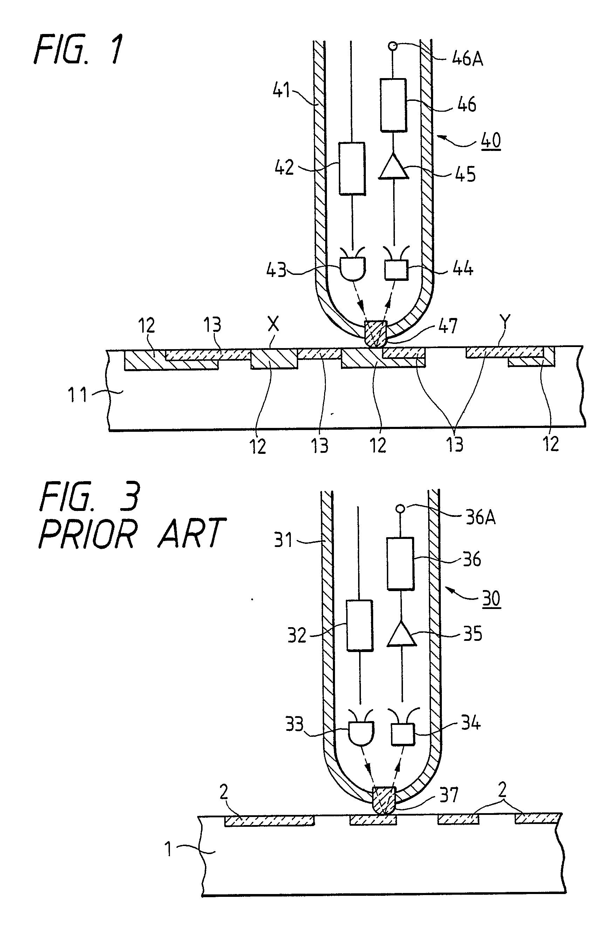

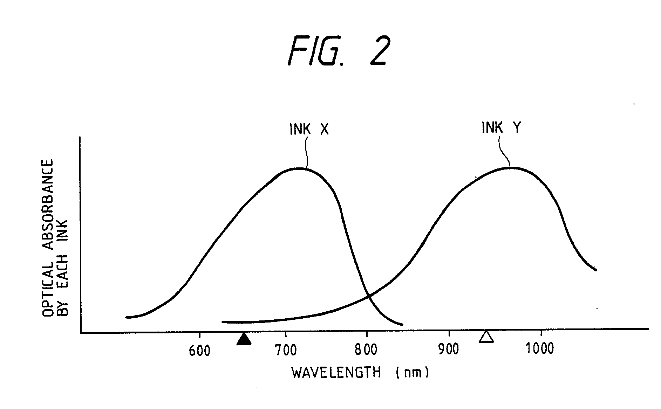

An embodiment of the present invention will now be described with reference to Figs. 1 and 2. As illustrated in the figures, a bar code 12 is printed on a sheet 11 of paper with ink transparent to infrared light and further a bar code 13 is multi-printed on the bar code 12 with ink transparent to visible light but absorptive in the infrared region.

For example, ink X for the bar code 12 is assumed to be transparent in a wavelength region above 800 nm but absorptive near 640 through 700 nm, while ink Y for the bar code 13 is assumed to be transparent near 640 nm but absorptive in a wavelength region above 800 nm.

A reader device 40 including a light source emitting infrared rays, i.e., via infrared LED 43, is employed in addition to the prior art reader device 30. The reader device 40 is arranged similarly to the prior art reader device 30 except that it emits infrared rays. Components in Figure 1 corresponding to those in Figure 3 have been designated with reference numbers having the same second digit, and no detailed description will be provided herein.

First, the reader device 30 is operated to read the bar code 12, and a photodetector 34 detects only a fraction of light from an LED 33 through the ink Y, because the light from the LED 33 is absorbed through the ink X while the light is allowed to pass through the ink Y and is reflected from the sheet 11 of paper. An output from the photodetector 34 provides a pattern of the bar code 12 drawn by the ink X.

Then, the reader device 40 is operated to read the bar code 13, and a photodector 44 detects only a fraction of the light from an infrared LED 43 through the ink X, because the light from the infrared LED 43 is absorbed through the ink Y (bar code 13) while the light is allowed to pass through the ink X (bar code 12) and is reflected from the sheet 11 of paper. An output from the phtodetector 44 provides a pattern of the bar code 13 drawn by the ink Y.

Referring here to Figure 2, a comparison between optical properties of the inks X and Y is illustrated, wherein symbols ▲ and △ respectively denote peak wavelengths of emission emitted from an LED of a reader device prepared during experiments.

Although in the present embodiment described above, an infrared LED 43 was illustratively employed as a light source, it can be replaced by a semiconductor laser. Additionally, rather than using two kinds of reader devices such as devices 30 and 40, a single scanner body may be employed for both reader devices by switching a light source with a switch and further switching the photodetector corresponding to that light source. Alternatively, a photodetector with a wider half-width at half height may be employed for both the wavelength regions. Furthermore, use of a semiconductor laser emitting short wavelength light assures application of the present apparatus to the ultraviolet region.

According to the multi-printing bar code system of the present invention, as described above, a reader device including a light source emitting light of different wavelength regions is provided and a bar code pattern is formed by multi-printing with inks of different absorbances depending upon wavelengths. Thus, a single bar code can be provided which includes information of at least two kinds to thereby reduce as much as possible the kinds of printed bar codes.

## Claims

1. A bar code system, comprising:
a first bar code printed on a first region of a substrate with a first ink absorptive in a first wavelength region;
a second bar code printed on said substrate in said first region with a second ink absorption in a second wavelength region different from said first wavelength region; and
a reading device having means for emitting light in different wavelength regions and means for detecting light reflected from said substrate in each of said different wavelength regions to thereby separately read each of said first and second bar codes.

2. A bar code system as claimed in claim 1, wherein said reading device first detects reflected light in one of said different wavelength regions and subsequently detects reflected light in another of said different wavelength regions.

3. A bar code system as claimed in claim 1, wherein said different wavelength regions comprise said first and second wavelength regions.

4. A bar code system as claimed in claim 1, wherein said first wavelength region is within a visible wavelength region and said second wavelength region is an optical wavelength outside of the visible wavelength region.

5. A bar code system as claimed in claim 1, wherein said second wavelength region comprises the infrared region.

6. A bar code system as claimed in claim 1, wherein said second ink forming said second bar code overlays a portion of said first ink.

7. A bar code reader for reading a bar code printed on a substrate, said reader comprising:
means for emitting light in at least first and second different wavelength regions; and
means for detecting light reflected from said substrate in each of said different wavelength regions to thereby separately read each of said first and second bar codes printed on said substrate.

8. A method of printing information on a substrate in the form of a bar code, said method comprising:
printing a first bar code on a first region of said substrate with a first ink absorptive in a first wavelength region: and
printing a second bar code on said substrate in said first region with a second ink absorption in a second wavelength region different from said first wavelength region.

9. An information-carrying article, comprising:
a substrate;
a first bar code printed on a first region of a substrate with a first ink absorptive in a first wavelength region: and
a second bar code printed on said substrate in said first region with a second ink absorption in a second wavelength region different from said first wavelength region.

# FIG. 1

41
42
46A
46
40
45
43
44
12
13
X
47
Y
11
12
13
12
13
12

# FIG. 3
# PRIOR ART

31
36A
36
30
32
35
33
34
2
37
2
1

# FIG. 2

INK X    INK Y

OPTICAL ABSORBANCE BY EACH INK

600    700    800    900    1000

WAVELENGTH (nm)